# EUROPEAN PATENT SPECIFICATION

(11) **EP 0 693 398 B1**
(45) Date of publication and mention of the grant of the patent: **07.01.1999**
(21) Application number: 95109480.4
(22) Date of filing: 19.06.1995
(51) Int. Cl.: B60Q 1/26

(54) **Mounting structure of lamp assembly**
Einbaueinrichtung einer Lampe
Structure de montage pour lampe

(30) Priority: 20.06.1994 JP 159636/94
(43) Date of publication of application: 24.01.1996
(73) Proprietor: Kabushiki Kaisha Toyoda Jidoshokki Seisakusho, Aichi-ken (JP)
(72) Inventor: Iwasaki, Makoto, c/o K.K. Toyoda, Kariya-shi, Aichi-ken (JP); Jonishi, Hiroshi, Aichi-ken, 471 (JP)
(74) Representative: Tiedtke, Harro, Dipl.-Ing.

(56) References cited:
- DE-A- 3 943 079
- DE-C- 4 242 439
- FR-A- 2 296 548
- FR-A- 2 552 719
- FR-A- 2 598 780
- FR-A- 2 708 539
- JP-U-61 085 003

## Description

The present invention relates to the mounting structure of a lamp assembly, and more particularly, to the mounting structure of a lamp assembly according to the preamble of the patent claim 1.

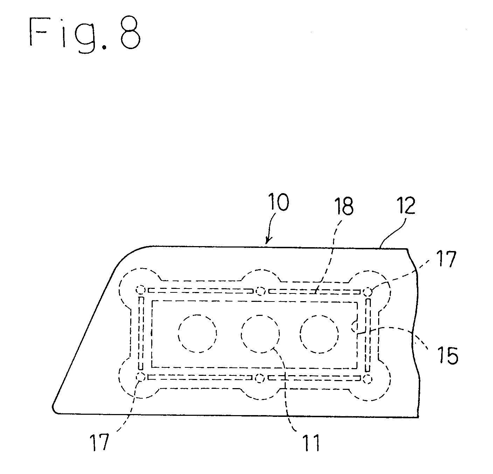

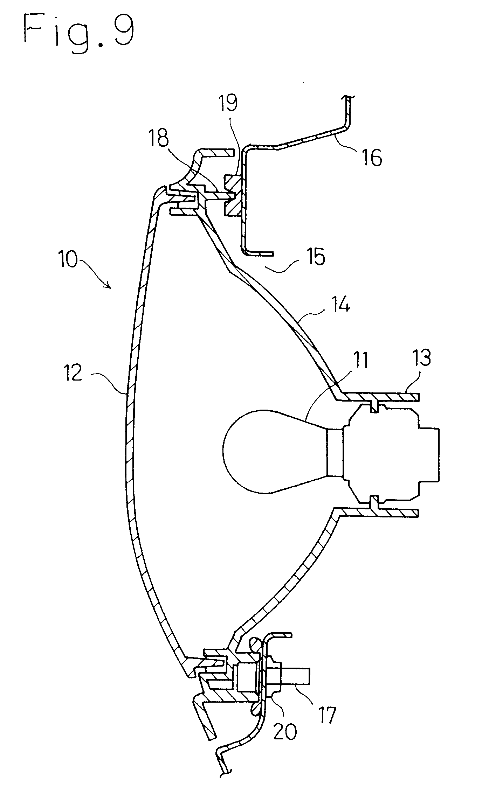

In general, lamp assemblies are mounted on the rear of an automobile. Such lamp assemblies are known as combination lamp assemblies where a plurality of electric bulbs are accommodated in a common housing. Figs. 8 and 9 illustrate an example of a combination lamp assembly 10 mounted on the body of an automobile (see Japanese Unexamined Utility Model Publication No. 61-85003). The combination lamp assembly 10 includes a plurality of electric bulbs 11 and a housing 12. The housing 12 has, for each electric bulb 11, a socket portion 13 and a reflecting portion 14. On the other hand, the automobile body is provided with a panel 16. The panel 16 is formed with an opening 15 through which a plurality of the reflecting portions 14 of the housing 12 are inserted. A plurality of stud bolts 17 extend through the housing 12 and project toward the panel 16. A mounting piece 18 is provided over the entire perimeter of the opening 15 in the housing 12.

To mount the housing 12 on the panel 16 of the automobile body, a packing 19 is arranged near the perimeter of the opening 15, the stud bolt 17 is passed through the packing 19 and the panel 16, and the housing 12 is fixed to the panel 16 with a nut 20 screwed on the stud bolt 17. When the housing 12 is mounted on the panel 16, the packing 19 is strongly compressed in the vicinity of the stud bolt 17, as shown in Fig. 9. However, the packing 19 located away from the stud bolt 17 is weakly compressed by the mounting piece 18.

Therefore, in the conventional mounting structure, the pressure applied to the packing 19, i.e., the seal pressure, is high in the vicinity of the stud bolt and low in vicinities spaced apart from the stud bolt. For this reason, there is a possibility that a water leak may occur at locations where the seal pressure is low.

The reference DE 39 43 079 A1 discloses another mounting structure of this kind. As can be gathered from this document, the known mounting structure for a lamp assembly has an electric bulb having a light emitting portion and a base portion. Furthermore, the mounting structure has a housing having a socket portion to which the base portion (without any reference number) is detachably connected and a reflecting portion surrounding the light emitting portion. A panel is provided with an opening, through which the socket portion is inserted. A seal in the form of bellows is disposed around the circumference of the opening between the reflection section and the panel. A fixing member is provided for abutting against the inner side of the panel to clamp the seal with the reflection portion.

The document DE 39 43 079 A1 therefore follows the technical solution to arrange a bellows-like seal between the reflection part and the panel surrounded by a plurality of bolts. In order to avoid a faulty sealing, a plurality of spaces are arranged integrally with the reflection portion of the lamp assembly which are pressed against the panel by the clamping force of the fixing members.

It is an object of the present invention to provide a mounting structure of an automobile lamp assembly which produces a substantially even seal pressure and thereby prevents water leaks.

This object is achived by the subject-matter of claim 1.
Fig. 1 is a side view showing an automobile in which the mounting structure of an automobile lamp assembly according to the present invention is formed;
Fig. 2 is a front view showing the housing of the lamp assembly in an enlargement of the circled portion of Fig. 1;
Fig. 3 is an enlarged cross sectional side view of the lamp assembly of Fig. 2 taken substantially along the line 3-3;
Fig. 4 is a cross sectional side view showing the mounting structure of a lamp assembly in a second embodiment of the invention;
Fig. 5 is a cross sectional side view showing the mounting structure of a lamp assembly in a third embodiment of the invention;
Fig. 6 is a cross sectional side view showing the mounting structure of a lamp assembly in a fourth embodiment of the invention;
Fig. 7(a) is a front view showing the socket portion of the housing of the embodiment of Fig. 6, the electric bulb being removed;
Fig. 7(b) is a rear view showing the base portion of the electric bulb of the embodiment of Fig. 6;
Fig. 8 is a front view showing the housing of a conventional lamp assembly; and
Fig. 9 is a cross sectional side view showing the mounting structure of the conventional lamp assembly shown in Fig. 8.

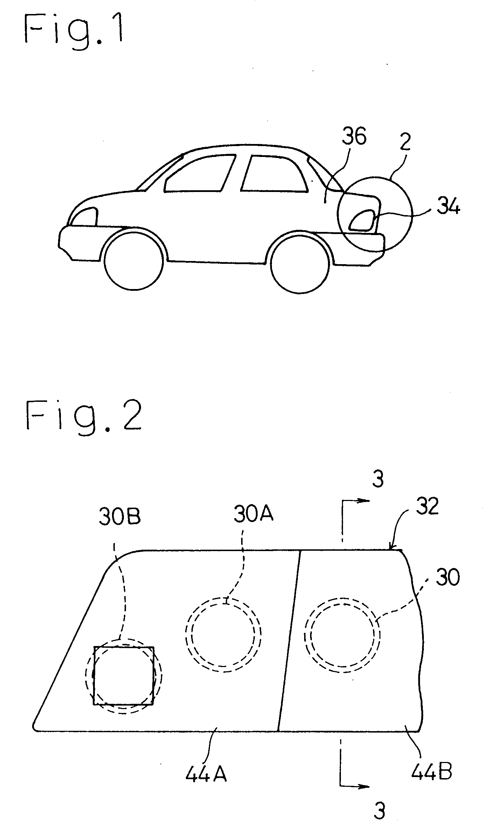

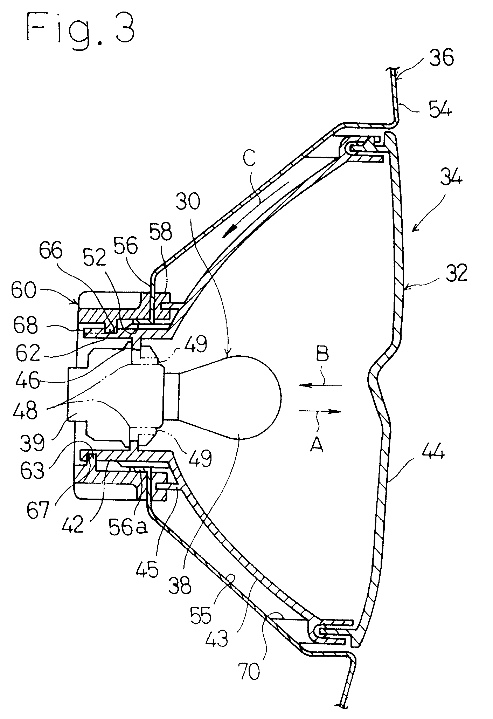

The mounting structure of a lamp assembly of a first embodiment of the invention will hereinafter be described with reference to the drawings. As shown in Figs. 2 and 3, a lamp assembly 34 is provided with an electric bulb 30 and a housing 32. The mounting structure of the lamp assembly 34 is such that the lamp assembly 34 is mounted on the body 36 of an automobile shown in Fig. 1. The electric bulb 30 has a light-emitting portion 38 and a base portion 39. The housing 32 has a socket portion 42, a reflecting portion 43, and a lens portion 44. The babe portion 39 of the electric bulb 30 is detachably mounted within the socket portion 42. The reflecting portion 43 surrounds the light-emitting portion 38 of the electric bulb 30 to achieve a beam-condensing function.

The socket portion 42 of the housing 32 in this embodiment is cylindrical and is formed with a pair of projections 46 extending in the radial direction from the inner surface thereof. On the other hand, in correspondence with the projections 46, the outer surface of the base portion 39 of the electric bulb 30 is formed with L-shaped grooves 48 on the outer surface thereof. Each groove 48 consists of an axially extending portion and a circumferentially extending portion.

The axial portion of the groove 48 is provided at the outer end thereof with an insertion portion 49 which is open in the vicinity of the light-emitting portion 38 to the end face of the base portion 39. If the insertion portion 49 is opposed to each projection 46 and the electric bulb 30 is pushed in the direction indicated by arrow A, each projection 46 will slide in the axial portion of the associated groove 48 until reaching the corner of the groove 48. Thereafter, if the electric bulb 30 is rotated clockwise, each projection 46 will slide on the circumferential portion of the groove 48 and, as illustrated in Fig. 3, the bulb 30 will be mounted on the socket portion 42. In order to detach the electric bulb 30, it is rotated in the opposite direction until each projection 46 reaches the corner of the associated groove 48, and then the electric bulb 30 is pulled out in the direction indicated by arrow B.

The housing 32, as shown in Fig. 2, accommodates three electric bulbs 30, 30A, and 30B, and is used for a combination lamp assembly. Therefore, the housing 32 has, for each bulb, the socket portion 42, the reflecting portion 43 shown in Fig. 3, and the lens portion 44, which comprises a lens portion 44B for the electric bulb 30 and a lens portion 44A for the electric bulbs 30A and 30B. The socket portion 42 and the reflecting portion 43 are integrally formed of resin, and this is bonded to the lens portion 44 made from transparent resin to form the housing 32.

The panel 54 of the automobile body 36 is provided with an opening 52 into which the socket portion 42 of the housing 32 is inserted. As shown in Fig. 1, the lamp assembly 34 is a rear lamp that is mounted on the rear of the automobile body 36, and the panel 54 is the rear panel of the automobile body. The panel 54, as shown in Fig. 3, contours to the shape of the reflecting portion 43 of the housing 32 and is provided with a concave portion 55 into which the reflecting portion 43 can be fitted. A cylindrical rib 56a forming the opening 52 is formed at the deepest part of the concave portion 55. This opening 52 positions the socket portion 42 of the housing 32.

A seal 58 is formed of an elastic material, such as rubber or urethane foam, into a closed loop circular shape. The front view of the seal may take the form of a circle, an ellipse, a square, or other closed loop shape. This seal 58 is arranged about the outer circumference of the socket portion 42 between the reflecting portion 43 and the panel 54.

In the embodiment shown in Fig. 3, the seal 58 is formed into a circular ring shape with rubber and is located at a surface opposed to the reflecting portion 43 with a groove extending over its entire circumference. A circular support portion 45 projects from the reflecting portion 43 of the housing 32 toward the panel 54. The support portion 45 is inserted into the groove formed in the seal 58 so that the deal 58 is mounted on the support portion 45 of the housing 32. On the other hand, the panel 54 has an annular flat portion 56 continuous with the concave portion 55, and the above-described opening 52 is formed in the substantially central portion of the flat portion 56. The seal 58 is in close contact with the flat portion 56 of the panel 54.

A lock ring 60 is fitted on the socket portion 42 to contact the flat portion 56. The lock ring 60 holds the socket portion 42, or more specifically, the support portion 45, against the seal 58 to maintain airtightness between the flat portion 56 and the seal 58.

In the embodiment shown in Fig. 3, the lock ring 60 is made of resin and presents a substantially cylindrical shape. The inner surface of the lock ring 60 has two inwardly extending projections 62 and 63. The projections 62 and 63 are axially spaced apart. On the other hand, the socket portion 42 has on its outer surface a groove 66 with which the first projection 62 engages and a groove 67 with which the second projection 63 engages.

Each of the two grooves 66 and 67, like the groove 48 of the base portion 39, comprises an axial portion and a circumferential portion. The circumferential portion spirally extends toward the flat portion 56 of the panel 54 like a screw thread. Each of the grooves 66 and 67 has an insertion portion 68 at the leftward end thereof (as viewed in Fig. 3), and through the insertion portions 68, the projections 62 and 63 engage with the grooves 66 and 67.

When the lamp assembly 34 is mounted to the automobile body 36, the socket portion 42 of the housing 32 is first inserted into the opening 52 of the panel 54. Then, the lock ring 60 is engaged to the socket portion 42 of the housing 32. For that purpose, the projections 62 and 63 of the lock ring 60 are aligned with the insertion portions 68 of the grooves 66 and 67, and then the lock ring 60 is pushed in the direction A of Fig. 3. Consequently, the projection 62 slides on the axial portion of the groove 66 and reaches the corner between the axial portion and the circumferential portion. Likewise, the projection 63 slides on the axial portion of the groove 67 and reaches the corner between the axial portion and the circumferential portion.

Thereafter, when the lock ring 60 is rotated, the projection 62 will slide on the circumferential portion of the groove 66 and the projection 63 will slide on the circumferential portion of the groove 67. As they slide, the lock ring 60 comes close to the flat portion 56 of the panel 54 due to the spiral nature of the circumferential portions of the grooves. At the same time, the entire housing 32 is pulled toward the panel 54. If the end face of the lock ring 60 is pushed against the flat portion 56, the seal 58 will be evenly clamped between the support portion 45 of the housing 32 and the flat portion 56 of the panel 54, thereby creating an even seal pressure. The magnitude of this seal pressure is determined so that water introduced along the direction indicated by arrow C from the outside into the concave portion 55 is prevented from entering the interior of the automobile body 36.

To detach the lock ring 60 from the socket portion 42 of the housing 32, the lock ring 60 is rotated in the direction opposite to the mounting direction and, when the projections 62 and 63 reach the corners of the grooves 67 and 68, the lock ring 60 is pulled out in the direction B.

In the illustrated embodiment, the housing 32 is mounted on the panel 54 by only the lock ring 60, and stud bolts have not been used in the housing 32. Thus, by dispensing with stud bolts, the ability to rapidly mount the lamp assembly 34 on the automobile body 36 is enhanced. In this case, it is preferable that a plurality of ribs 70 be projected from the vicinity of the outer circumferential edge or the reflecting portion 43 toward the concave portion 55 of the panel 54. The ribs 70 make contact with the concave portion 55 when the lock ring 60 is pushed against the panel 54. This arrangement prevents instability of the lamp assembly.

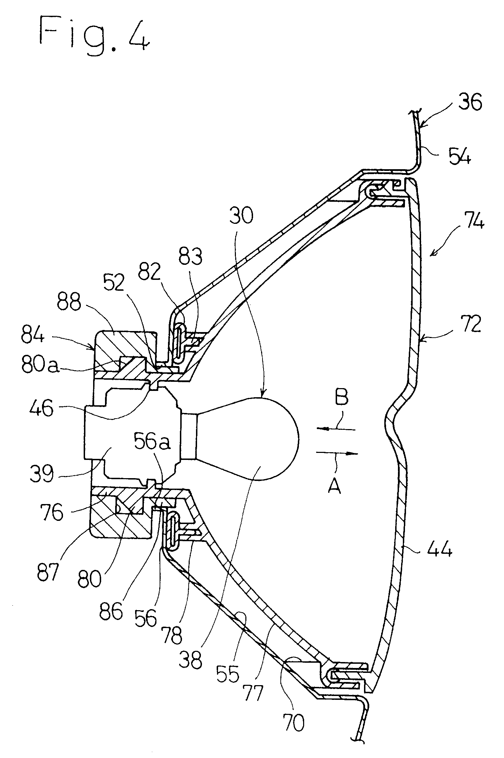

Referring to Fig. 4, which shows a second embodiment of the present invention, a lamp assembly 74 is provided with an electric bulb 30 and a housing 72 is mounted to an automobile body 36. The electric bulb 30 has the same structure as the embodiment of Fig. 3. In the embodiment of Fig. 4, the same reference numerals will be applied to the parts substantially identical in structure with the embodiment shown in Fig. 3 and a detailed description of the identical parts is omitted.

The housing 72 includes a cylindrical socket portion 76 for detachably mounting the base portion 39 of the electric bulb 30, and a reflecting portion 77 surrounding the light-emitting portion 38 of the electric bulb 30. A pair of radially inward projections 46 are formed on the inner surface of the socket portion 76. On the outer surface of the socket portion 76, a guide 80 projects outward and extends about the entire socket surface in the circumferential direction. The guide 80 is a right-angled triangle in cross section and has an inclined surface 80a on the left side thereof (as viewed in Fig 4.).

A seal 82 is formed of an elastic material such as rubber or urethane foam into an annular shape so that its front face presents a circle, an ellipse, a square, or other closed loop shape. This deal 58 is arranged on the outer surface of the socket portion 76 between the reflecting portion 77 of the housing 72 and the panel 54.

In the illustrated embodiment of Fig. 4, the seal 82 is a hollow shape, is formed so that its front shape presents a circle, and has a circumferential projection 83 on the end face opposite to the reflecting portion 77. On the other hand, from the reflecting portion 77 of the housing 72, a circular support portion 78 with an annular groove projects toward the panel 54. The projection 83 of the seal 82 is inserted into the groove of the support portion 78. The seal 82, supported by the support portion 78, contacts the flat portion 56 of the panel 54.

The socket portion 76 of the housing 72 penetrates the opening 52 of the panel 54. A lock ring 84 is mounted on the socket portion 76 of the housing 72. If the lock ring 84 is fitted on the socket portion 76, it will contact the rib 56a of the panel 54 and compress the seal 82.

The lock ring 84 is formed of resin and has a cylindrical sleeve portion 86. The inner surface of the sleeve portion 86 has a circumferentially extending groove 87 formed therein. The sleeve portion 86 is further formed with a plurality of outwardly extending projections 88. These projections 88 are positioned on the end portion of the sleeve 86 spaced from the reflecting portion 77 of the housing 72. It is preferable that projections 88 be equidistantly spaced in the circumferential direction.

In this embodiment the lock ring 84 is connected to the socket portion 76 prior to the placement of the housing 72 in the panel 54. When the lock ring 84 is mounted on the socket portion 76, the sleeve portion 86 of the lock ring 84 is fitted on the socket portion 76 and the lock ring 84 is pushed in the direction A. The socket portion 76 of the housing 72 is deformed due to the engagement of the lock ring 84 with the inclined surface 80a of the guide 80 of the socket portion 76. When the guide 80 is aligned with the groove 87, the shape of the socket portion 76 is restored. As a result, the lock ring 84 is fitted on the socket portion 76, so that it is undetachable from the guide 80 but is rotatable about the guide 80.

In order to make it easier to mount the lock ring 84 on the socket portion 76, it is preferred that an inclined surface 80a, such as that shown in Fig. 4, be provided in the guide 80. Also, it is preferred to provide at least one axial slit (not shown) in the socket portion 76.

Preferably, the inner diameter of the opening 52 of the panel 54 is approximately the same as the outer diameter of the sleeve portion 86, and the sleeve portion 86 of the lock ring 84 is loosely fitted on the socket portion 76. Also, the flat portion 56 of the panel 54 is provided with notches (not shown) which allow the projections 88 to pass through.

When the lamp assembly 74 is mounted to the automobile body 36, the housing 72 is arranged in the concave portion 55 so that the projections 88 of the lock ring 84 are aligned with the notches (not shown) in the flat portion 56. In this state, if the housing 72 is pushed in the direction B, the projections 88 will pads through the notches. The sleeve portion 86 of the lock ring 84 is thus fitted into the opening 52 of the panel 54, and the housing 72 is held in position. The dimensions of each part is predetermined so that while the housing 72 is held in position, the seal 82 is sufficiently compressed between the support portion 78 of the housing 72 and the flat portion 56. After the projections 88 pass through the notches, the lock ring 84 is rotated so that the projections 88 are moved away from the corresponding notches in the circumferential direction and instead contact the annular rib 56a of the panel 54. With this arrangement, the mounting of the housing 72 is completed.

According to the embodiment shown in Fig. 4, the lock ring 84 and the seal 82 mounted on the housing 72 in advance, so that the mounting efficiency of the lamp assembly 34 in assembly lines is enhanced.

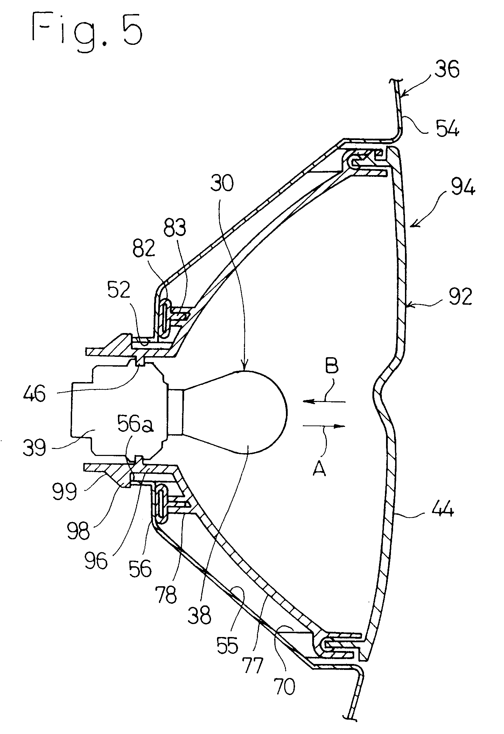

Referring to Fig. 5, which shows a third embodiment of the present invention, a lamp assembly 94 provided with an electric bulb 30 and a housing 92 are mounted to an automobile body 36. The electric bulb 30 and the panel 54 are identical in structure with the corresponding parts of the embodiment of Fig. 3. In the embodiment of Fig. 5, the same reference numerals will be applied to the parts substantially identical in structure with the embodiment shown in Fig. 3 or 4 and therefore a detailed description of the identical parts is omitted.

A housing 92 includes a cylindrical socket portion 96 for detachably mounting the base portion 39, and a reflecting portion 77 surrounding the light-emitting portion 38 of the electric bulb 30. The socket portion 96 is, formed with a pair of radially inwardly extending projections 46. On the outer surface portion of the socket portion 96, a jaw 98 projects radially outward and surrounds the entire socket 96.

A seal 82 is supported by a support portion 78 provided on the reflecting portion 77 and contacts the flab portion 56 of the panel 54.

The jaw 98 is bent inward when it is passed through the opening 52 of the panel 54 in the direction of arrow B. After the jaw 98 passes through the opening 52, it will be caught on the rib 56a as shown in Fig. 5. In order to perform this operation, the socket portion 96 of the housing 92 is required to be elastic. Further, in order to facilitate the inward bending of the jaw 98 and the socket portion 96, it is preferable that one axial slit (not shown) or a plurality of axial slits be formed in the socket portion 96. Also, the jaw 98 preferably provided with an inclined surface 99 inclining outward from the open end of the socket portion 96 toward the reflecting portion 77.

When the lamp assembly 94 is attached to the automobile body 36, the socket portion 96 of the housing 92 is inserted through the opening 52 of the panel 54, and the housing 92 is pushed in the direction indicated by arrow B. Then, the engagement of the jaw 98 with the rib 56a causes the socket portion 96 to bend inward together with the jaw 98 within the opening 52. When the jaw 98 is caught on the rib 56a, the seal 82 is evenly clamped between the support portion 78 of the housing 92 and the flat portion 56 of the panel 54, and an even seal pressure will exist. In this case, pressure can be applied to the seal 82 with a very simple operation in which only the socket portion 96 of the housing 92 is connected to the panel 54, so that better assembly efficiency is attained.

To detach the lamp assembly 94 from the automobile body 36, the jaw 98 is bent inward so that it disengages from the rib 56a, and then the housing 92 is pushed in the direction indicated by arrow A.

In the embodiment shown in Fig. 5, the housing 92 is mounted on the panel 54 by only the jaw 98, and stud bolts are not used. Thus, by dispensing with stud bolts, the mounting efficiency is enhanced. In this case, as in the case of the embodiments described above, to prevent the loose mounting of the lamp assembly 94 to the automobile body 36, it is preferable that a plurality of ribs 70 be projected from the reflecting portion 77 of the housing 92 toward the concave portion 55 of the panel 54. The ribs 70 make contact with the concave portion 55 when the jaw 98 is caught on the rib 56a.

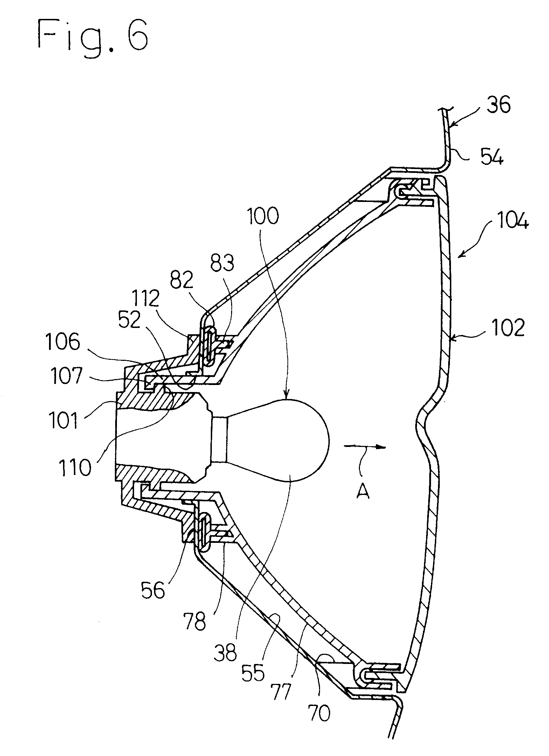

Referring to Fig. 6, which shows a fourth embodiment of the invention, a lamp assembly 104 provided with an electric bulb 100 and a housing 102 to be mounted on an automobile body 36. The panel 54 of the automobile body 36 is identical in structure with that shown in the embodiment of Fig. 3. In the embodiment shown in Fig. 6, the same reference numerals will be applied to parts substantially identical in structure to those of the embodiments shown in Fig. 3 or 4, and a detailed description of the identical parts is omitted.

The electric bulb 100 has a light-emitting portion 38 and a base portion 101, which is different in structure from the base portion of the electric bulb shown in Fig. 3. The housing 102 includes a cylindrical socket portion 106 for detachably mounting the base portion 101 of the electric bulb 100, and a reflecting portion 77 surrounding the light-emitting portion 38.

A seal 82 is supported by a support portion 78 provided on the reflecting portion 77 of the housing 102 and is in contact with the flat portion 56 of the panel 54.

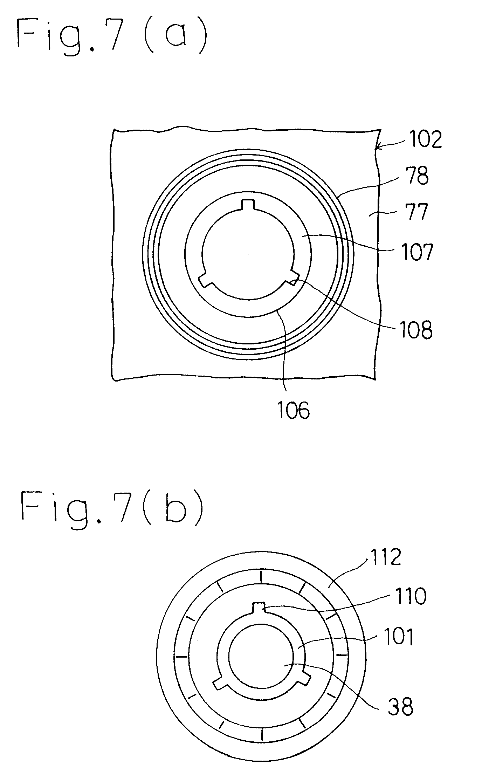

A first locking piece 107 projects radially inward from the socket portion 106. As shown in Fig. 7(a), the first locking piece 107 of this embodiment is in the form of a flange provided with three notches 108 equidistantly spaced apart.

A second locking piece 110 has projections extending radially outward from the base portion 101 at locations spaced apart by the same distance as the notches 108 described above. As shown in Fig. 7(b), when the electric bulb 100 is inserted from the left, as viewed in Fig. 6, into the socket portion 106, the projections pass through the notches 108 of the first locking piece 107. Then, the second locking piece 110 will be caught inside the socket portion 106 if the electric bulb 100 is rotated to misalign the notches 108 and the projections.

As shown in Fig. 7(b), the second locking piece 110 comprises three projections arranged equidistantly in the circumferential direction, and each projection is sized so as to pass through the notched 108 of the first locking piece 107. Alternatively, the first locking piece 107 may have a projection or projections and the second locking piece 110 may be a flange with notches.

Further, a stopper, i.e., a third locking piece 112, projects radially outward from the base portion 101 of the electric bulb 100 at a position spaced to the left, as viewed in Fig. 6, of the second locking piece 110. When the stopper 112 is brought into contact with the inner surface of the flat portion 56 of the panel 54, it applies pressure to the seal 82 in cooperation with the first locking piece 107 and the second locking piece 110.

The stopper 112 is formed into a cylindrical shape. Alternatively, the portion contacting the flat portion 56 of the panel 54 may be formed into an annular shape, and that annular portion may be joined to the base 101 with a plurality of ribs. The base portion 101 of the electric bulb 100 is formed of resin so that it is integrally formed with the second locking piece 110 and the stopper 112. In this case, the number of parts is reduced.

When the lamp assembly 104 is mounted on the automobile body 36, the socket portion 106 is inserted through the opening 52 of the panel 54 from right to left as viewed in Fig. 6. On the other hand, the electric bulb 100 is inserted into the socket portion 106 from the interior of the automobile body and pushed in the direction A until the second locking piece 110 passes through the first locking piece 107. The electric bulb 100 is rotated after the second locking piece 110 passes through the first locking piece 107 to engage the second locking piece 110 with the first locking piece 107. At this time, the stopper 112 is brought into contact with the inner surface of the flat portion 56 of the panel 5. In cooperation with the first and second locking pieces 107 and 110, this applies sufficient pressure to the seal 82.

In any of the embodiments described above, the seal is clamped in the vicinity of the outer surface of the socket portion between the reflecting portion of the housing and the panel. Accordingly, the mounting structure of the lamp assembly in the present invention is different from that of the prior art in which the seal is arranged in the vicinity of the outer circumferential edge of the reflecting portion of the housing. Thug, the seal can be made shorter. If the seal is shorter, the probability of water leakage is reduced.

## Claims

1. A mounting structure of a lamp assembly including:
- an electric bulb (30) having a light-emitting portion (38) and a base portion (39); and
- a housing (32) having a socket portion (42, 76, 96, 106) which is insertable through an opening (52) of a panel (54) of an automobile body (36) and to which said base portion (39, 101) is detachably connected and a reflecting portion (43, 77) surrounding said light-emitting portion (38);
said mounting structure comprising:
- a seal (58, 82) disposed to surround the circumference of said opening (52) between said reflecting portion (43, 77) of said housing (32) and an outer side of the panel (54); and
- a fixing member (60, 84, 98, 101) abutting against an inner side of the panel (54) thereby clamping the panel (54) and said seal (58, 82) with said reflecting portion (43, 77), wherein said seal (58, 82) hermetically seals between the outer side and the inner side of the panel (54),
***characterized in that***
said fixing member (60, 84, 98, 112) is provided with said socket portion (42, 76, 96, 106) so that a pressure can be applied to the seal (58) only by connecting the socket portion (42, 76, 96, 106) to the panel (54) by means of said fixing member (60, 84, 98, 112).

2. A mounting structure according to claim 1, wherein said fixing member includes a lock ring (60, 84) engaged with said socket portion (42, 76).

3. A mounting structure according to claim 1, wherein said fixing member includes a jaw (98), and wherein said jaw elastically deforms to allow said socket portion (96) to be inserted into the opening (52) and then engages with the rim of the opening (52).

4. A mounting structure according to claim 1, wherein said fixing member includes:
a first locking piece (107) provided with said socket portion (106) projecting radially inward from said socket portion (106);
a second locking piece (110) provided with said base portion (101) projecting radially outward from the base portion (101), said second locking piece (110) engaging with said first locking piece (107) when said base portion (101) is inserted into said socket portion (106); and
a third locking piece (112) projecting outward from said base portion (101) to locate further apart from said panel (54) than said second locking piece (110), said third locking piece (112) abutting against the inner surface of said panel (54) when said base portion (101) is inserted into said socket portion (106).

5. A mounting structure according to claim 4, wherein said first locking piece (107) has a notch through which said second locking piece (110) can pass, and wherein said first locking piece (107) engages with said second locking piece (110) by rotating said second locking piece (110).

6. A mounting structure according to any one of claims 1 to 5, wherein said reflecting portion (43, 77) has a ring-shaped support portion (45, 78) integrally formed with the reflecting portion (43, 77) and located to oppose the panel (54), said support portion (45, 78) serving to clamp said seal (58, 82) with said panel (54).

7. A mounting structure according to claim 6, wherein said third locking piece (112) has an abutting section located opposite to said support portion (78) and wherein said abutting section serves to clamp the panel (54) and the seal (58, 82) in cooperation with the support portion (78).

8. A mounting structure according to any one of claims 1 to 7, wherein said panel (54) has a recess for accommodating the reflecting portion (43, 77), said reflecting portion (43, 77) having a ring (70) abutting against the inner surface of the recess to support the housing (32).

## Patentansprüche

1. Montageaufbau einer Lampenbaugruppe mit:
einer Glühbirne (30), die einen Licht ausstrahlenden Abschnitt (38) und einen Sockelabschnitt (39) hat; und
ein Gehäuse (32), das einen Fassungsabschnitt hat (42, 76, 96, 106), der durch eine Öffnung (52) einer Paneele (54) einer Automobilkarosserie (36) einsetzbar ist, und an dem der Sockelabschnitt (39, 101) lösbar befestigt ist, wobei ein Reflexionsabschnitt (43, 77) den Licht ausstrahlenden Abschnitt (38) umgibt; wobei
der Montageaufbau umfaßt:
eine Dichtung (58, 82), die angeordnet ist, um den Umfang der Öffnung (52) zwischen dem Reflexionsabschnitt (43, 77) des Gehäuses (32) und einer Außenseite der Paneele (54) zu umgeben; und
ein Befestigungselement (60, 84, 98, 101), das an einer Innenseite der Paneele (54) anliegt und dabei die Paneele (54) und die Dichtung (58, 82) mit dem Reflexionsabschnitt (43, 77) festklemmt, wobei die Dichtung (58, 82) zwischen der Außenseite und der Innenseite der Paneele hermetisch abdichtet,
***dadurch gekennzeichnet, daß*** das Befestigungselement (60, 84, 98, 112) mit dem Fassungsabschnitt (42, 76, 96, 106) so versehen ist, daß ein Druck auf die Dichtung (58) nur durch Verbinden des Fassungsabschnitts (42, 76, 96, 106) mit der Paneele (54) mittels des Befestigungselements (60, 84, 98, 112) aufbringbar ist.

2. Montageaufbau nach Anspruch 1, wobei das Befestigungselement einen Verschlußring (60, 84) beinhaltet, der mit dem Fassungsabschnitt im Eingriff ist.

3. Montageaufbau nach Anspruch 1, wobei das Befestigungselement eine Klemmfeder (98) enthält, und wobei sich die Klemmfeder elastisch verformt um dem Fassungsabschnitt (96) zu ermöglichen, in die Öffnung (52) eingesetzt zu werden und dann mit dem Rand der Öffnung (52) in Eingriff zu kommen.

4. Montageaufbau nach Anspruch 1, wobei das Befestigungselement folgende Elemente hat:
ein erstes Verschlußstück (107), das mit dem Fassungsabschnitt (106) versehen ist und von dem Fassungsabschnitt (106) radial nach innen ragt;
ein zweites Verschlußstück (110), das mit dem Sockelabschnitt (101) versehen ist und von dem Sockelabschnitt (101) radial nach außen ragt, wobei das zweite Verschlußstück (110) mit dem ersten Verschlußstück (107) im Eingriff ist, wenn der Sockelabschnitt (101) in den Fassungsabschnitt (106) eingesetzt ist; und
ein drittes Verschlußstück (112), das von dem Sockelabschnitt (101) außen hervorragt, um von der Paneele (54) weiter entfernt plaziert zu sein als das zweite Verschlußstück (110), wobei das dritte Verschlußstück an der Innenfläche der Paneele (54) anliegt, wenn der Sockelabschnitt (101) in den Fassungsabschnitt (106) eingesetzt ist.

5. Montageaufbau nach Anspruch 4, wobei das erste Verschlußstück (107) eine Kerbe hat, durch die das zweite Verschlußstück (110) dringen kann und wobei das erste Verschlußstück (107) mit dem zweiten Verschlußstück (110) eingreift, indem das zweite Verschlußstück (110) gedreht wird.

6. Montageaufbau nach einem der Ansprüche 1 bis 5, wobei der Reflexionsabschnitt (43, 77) einen ringförmigen Abstützabschnitt (45, 78) hat, der einstückig mit dem Reflexionsabschnitt (43, 77) ausgebildet ist und gegenüber der Paneele (54) angeordnet ist, wobei der Abstützabschnitt (45, 78) dazu dient, die Dichtung (58, 82) mit der Paneele (54) fest zu klemmen.

7. Montageaufbau nach Anspruch 6, wobei das dritte Verschlußstück (112) einen Anlagebereich hat, der gegenüber dem Abstützabschnitt (78) angeordnet ist, und wobei der Anlagebereich dazu dient, die Paneele (54) und die Dichtung (58, 82) zusammen mit dem Abstützabschnitt (78) fest zu klemmen.

8. Montageaufbau nach einem der Ansprüche 1 bis 7, wobei die Paneele (54) eine Vertiefung hat, um den Reflexionsabschnitt (43, 77) aufzunehmen, wobei der Reflexionsabschnitt (43, 77) einen Ring (70) hat, der an der Innenfläche der Vertiefung anliegt, um das Gehäuse (32) abzustützen.

## Revendications

1. Structure de montage d'un ensemble de lampe comportant :
- une ampoule électrique (30) présentant une partie émettant de la lumière (38) et une partie de culot (39) ; et
- un boîtier (32) présentant une partie de douille (42, 76, 96, 106) qui peut être insérée à travers une ouverture (52) d'une panneau (54) d'une carrosserie d'automobile (36) et sur laquelle ladite partie de culot (39, 101) est racoordée, de façon à pouvoir être détachée, et une partie réfléchissante (43, 77) qui entoure ladite partie émettant de la lumière (38) ;
ladite structure de montage comprenant ;
- un joint étanche (58, 82) disposé de façon à entourer la circonférence de ladite ouverture (52) entre ladite partie réfléchissante (43, 77) dudit boîtier (32), et un côté extérieur du panneau (54) ; et
- un élément de fixation (60, 84, 98, 101) qui bute contre un côté intérieur du panneau (54) ce qui enserre le panneau (54) et ledit joint étanche (58, 82) sur ladite partie réfléchissante (43, 77), dans lequel ledit joint étanche (58, 82) scelle hermétiquement le côté extérieur et le côté intérieur du panneau (54) ,
caractérisée en ce que ledit élément de fixation (60, 84, 98, 112) est muni de ladite partie de douille (42, 76, 96, 106) de sorte qu'une pression peut être appliquée sur le joint étanche (58) seulement en raccordant la partie de douille (42, 76, 96, 106) au panneau (54) au moyen dudit élément de fixation (60, 84, 98, 112).

2. Structure de montage selon la revendication 1, caractérisée en ce que ledit élément de fixation comporte une bague de verrouillage (60, 84) engagée sur ladite partie de douille (42, 76).

3. Structure de montage selon la revendication 1, caractérisée en ce que ledit élément de fixation comporte une mâchoire de serrage (98), et en ce que ladite mâchoire de serrage se déforme de manière élastique pour permettre à ladite partie de douille (96) de s'insérer dans l'ouverture (52) puis s'engage sur le rebord de l'ouverture (52).

4. Structure de montage selon la revendication 1, caractérisée en ce que ledit élément de fixation comporte :
- une première pièce de blocage (107) munie de ladite partie de douille (106) qui fait saillie redialement vers l'intérieur à partir de ladite partie de douille (106) ;
- une deuxième pièce de blocage (110) munie de ladite partie de culot (101) qui fait saillie radialement vers l'extérieur à partir de ladite partie de culot (101), ladite deuxième pièce de blocage (110) s'engageant sur ladite première pièce de blocage (107) lorsque ladite partie de culot (101) est insérée dans ladite partie de douille (106) ; et
- une troisième pièce de blocage (112) qui fait saillie vers l'extérieur à partir de ladite partie de culot (101) pour se situer plus loin dudit panneau (54) que ladite deuxième pièce de blocage (110), ladite troisième pièce de blocage (112) butant contre la surface interne dudit panneau (54) lorsque ladite partie de culot (101) est insérée dans ladite partie de douille (106).

5. Structure de montage selon la revendication 4, caractérisée en ce que ladite première pièce de blocage (107) présente une encoche à travers laquelle ladite deuxième pièce de blocage (110) peut passer, et en ce que ladite première pièce de blocage (107) s'engage sur ladite deuxième pièce de blocage (110) en faisant tourner ladite deuxième pièce de blocage (110).

6. Structure de montage selon l'une quelconque des revendications 1 à 5, caractérisée en ce que ladite partie réfléchissante (43, 77) présente une partie de support en forme de bague (45, 78) formée en une seule pièce avec la partie réfléchissante (43, 77) et située de façon à être opposée au panneau (54), ladite partie de support (45, 78) servant à enserrer ledit joint étanche (58, 82) et ledit panneau (54).

7. Structure de montage selon la revendication 6, caractérisée en ce que ladite troisième pièce de blocage (112) présente une section de butée située de manière opposée à ladite partie de support (78) et en ce que ladite section de butée sert à enserrer le panneau (54) et le joint étanche (58, 82) en coopération avec la partie de support (78).

8. Structure de montage selon l'une quelconque des revendications 1 à 7, caractérisée en ce que ledit panneau (54) présente un évidement pour loger la partie réfléchissante (43, 77), ladite partie réfléchissante (43, 77) présentant une bague (70) qui bute contre la surface interne de l'évidement afin de supporter la boîtier (32).
